(19) **Europäisches Patentamt / European Patent Office / Office européen des brevets**

(11) **EP 4 481 615 B1**

(12) **EUROPEAN PATENT SPECIFICATION**

(45) Date of publication and mention
of the grant of the patent:
**05.11.2025 Bulletin 2025/45**

(21) Application number: **22928201.7**

(22) Date of filing: **23.09.2022**

(51) International Patent Classification (IPC):
**G21C 17/108** $^{(2006.01)}$   **G06F 30/20** $^{(2020.01)}$
**G21D 3/04** $^{(2006.01)}$   **G06F 119/06** $^{(2020.01)}$
**G06F 119/08** $^{(2020.01)}$

(52) Cooperative Patent Classification (CPC):
**G21C 17/108; G06F 30/20; G21D 3/04;**
G06F 2119/06; G06F 2119/08; Y02E 30/30

(86) International application number:
**PCT/CN2022/121067**

(87) International publication number:
**WO 2023/159938 (31.08.2023 Gazette 2023/35)**

(54) **REACTOR ONLINE PROTECTION METHOD AND SYSTEM, AND READABLE STORAGE MEDIUM**

ONLINE-SCHUTZVERFAHREN UND -SYSTEM FÜR REAKTOR UND LESBARES SPEICHERMEDIUM

PROCÉDÉ ET SYSTÈME DE PROTECTION EN LIGNE DE RÉACTEUR, ET SUPPORT DE STOCKAGE LISIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2022   CN 202210163682**

(43) Date of publication of application:
**25.12.2024   Bulletin 2024/52**

(73) Proprietors:
- **China Nuclear Power Technology Research Institute Co., Ltd**
  **Shenzhen, Guangdong 518031 (CN)**
- **China General Nuclear Power Corporation**
  **Shenzhen, Guangdong 518028 (CN)**
- **CGN Power Co., Ltd.**
  **Shenzen, Guangdong 518028 (CN)**
- **China Nuclear Power Engineering Co., Ltd.**
  **Shenzhen, Guangdong 518124 (CN)**

(72) Inventors:
- **LU, Xianghui**
  **Shenzhen, Guangdong 518031 (CN)**
- **HU, Yisong**
  **Shenzhen, Guangdong 518031 (CN)**
- **WANG, Weiru**
  **Shenzhen, Guangdong 518031 (CN)**
- **ZHANG, Yijun**
  **Shenzhen, Guangdong 518031 (CN)**
- **HU, Yousen**
  **Shenzhen, Guangdong 518031 (CN)**
- **FENG, Yingjie**
  **Shenzhen, Guangdong 518031 (CN)**
- **LI, Kejia**
  **Shenzhen, Guangdong 518031 (CN)**
- **HE, Mingtao**
  **Shenzhen, Guangdong 518031 (CN)**
- **MENG, Shuqi**
  **Shenzhen, Guangdong 518031 (CN)**
- **WU, Yuting**
  **Shenzhen, Guangdong 518031 (CN)**
- **CHEN, Tianming**
  **Shenzhen, Guangdong 518031 (CN)**
- **MAO, Yulong**
  **Shenzhen, Guangdong 518031 (CN)**
- **ZHANG, Wei**
  **Shenzhen, Guangdong 518031 (CN)**
- **PENG, Sitao**
  **Shenzhen, Guangdong 518031 (CN)**

• **CHENG, Yanhua**
  **Shenzhen, Guangdong 518031 (CN)**

(74) Representative: **Westphal, Mussgnug  & Partner,**
  **Patentanwälte mbB**
  **Werinherstraße 79**
  **81541 München (DE)**

(56) References cited:
  **CN-A- 105 448 361      CN-A- 110 322 976**
  **CN-A- 113 470 839      CN-A- 114 662 281**
  **CN-B- 110 322 976      US-B1- 6 400 786**

## Description

TECHNICAL FIELD

The invention relates to the field of nuclear power design, in particular to a reactor online protection method, a reactor online protection system and a readable storage medium.

BACKGROUND

In order to ensure the safety of the reactor, the maximum heat flux on the surface of the fuel assembly is required to be less than the critical heat flux in the design, so DNBR (Departure from Nucleate Boiling Ratio) protection is introduced. At the same time, in order to avoid excessive linear power density in the reactor core, LPD (Linear Power Density) protection is introduced.

The calculation of DNBR and LPD is not only related to the main pump speed, cold leg temperature and coolant pressure, but also related to the reactor core power distribution data, and the monitoring of reactor core power distribution is very important for the safe operation of the reactor. At present, the pressurized water reactor generally detects the neutron flux in the reactor core through a self-powered detector, and then periodically calculates the power distribution of the reactor core in combination with the monitoring data of a nuclear instrument outside the reactor, and when calculating the power distribution information of the reactor core, the measurement data of each group of neutron detectors is usually preprocessed first, and then each group of data after preprocessing is summarized. Finally, the core power distribution is deduced according to the summarized data. However, in this way, if the measurement data error of one or more neutron detectors is large, it will directly affect the accuracy of core power distribution reconstruction calculation, and then affect the accuracy of DNBR calculation value and LPD calculation value, making the safety margin of nuclear power operation smaller.

Publications CN 110 322 976 B, CN 113 470 839 A, CN 105 448 361 A and US 6 400 786 B1 are considered to be relevant to the present application.

SUMMARY OF THE INVENTION

TECHNICAL ISSUES

The technical problem to be solved by the invention is that the defect that the safety margin of the nuclear power operation in the prior art is small.

BRIEF SUMMARY OF THE INVENTION

PROBLEM SOLUTION

The technical scheme adopted by the invention for solving the technical problem is that the reactor online protection method comprises the following steps of:

Step S10. Acquiring n groups of detection data corresponding to self-powered detectors, wherein $n \geqq 4$;
Step S20. Taking m groups of different detection data from n groups of detection data to form a subset, and respectively reconstructing reactor core power distribution data of the corresponding subset according to the detection data of each subset, wherein $m \geqq 3$, and $m<n$;
Step S30. Respectively calculating a maximum LPD value and a minimum DNBR value corresponding to each subset according to the reactor core power distribution data corresponding to each subset;
Step S40. Selecting a final maximum LPD value from the maximum LPD values corresponding to each subset, and selecting a final minimum DNBR value from the minimum DNBR values corresponding to each subset;
Step S50. Determining whether to trigger a reactor trip signal according to the final maximum LPD value, the final minimum DNBR value, a preset LPD setting value and a preset DNBR setting value.

Preferably, n = 4, m = 3, and the number of subsets is four.

Preferably, in the step S40, selecting a final maximum LPD value from the maximum LPD values corresponding to each subset comprises:
Selecting a secondary maximum value from the maximum LPD values corresponding to each subset, and taking the secondary maximum value as the final maximum LPD value.

Preferably, in the step S40, selecting a final minimum DNBR value from the minimum DNBR values corresponding to each subset comprises:
Selecting a secondary minimum value from the minimum DNBR values corresponding to each subset, and taking the secondary minimum value as the final minimum DNBR value.

Preferably, the step S50 includes:

Judging whether the final maximum LPD value is greater than a preset LPD setting value;
Judging whether the final minimum DNBR value is less than a preset DNBR setting value;
Triggering a reactor trip signal if the final maximum LPD value is greater than the LPD setting value or the final minimum DNBR value is less than the DNBR setting value.

The invention also provides a reactor online protection system, comprising:

a data acquisition module is used for acquiring n groups of detection data corresponding to self-powered detectors, wherein n ≧ 4;

a combination reconstruction module is used for taking m groups of different detection data from the n groups of detection data to form a subset and respectively reconstructing the reactor core power distribution data of the corresponding subset according to the detection data of each subset, wherein m ≧ 3 and m<n;

a value calculation module is used for respectively calculating the maximum LPD value and the minimum DNBR value corresponding to each subset according to the reactor core power distribution data corresponding to each subset;

A value selection module is used for selecting a final maximum LPD value from the maximum LPD values corresponding to each subset, and selecting a final minimum DNBR value from the minimum DNBR values corresponding to each subset;

a determining module is used for determining whether to trigger a reactor trip signal according to the final maximum LPD value, the final minimum DNBR value, a preset LPD setting value and a preset DNBR setting value.

Preferably, n = 4, m = 3, and the number of subsets is four.

Preferably, the value selection module comprises:

An LPD value selection unit is used for selecting a secondary maximum value from the maximum LPD values corresponding to each subset, and use the secondary maximum value as the final maximum LPD value;

And a DNBR value selection unit is used for selecting a secondary minimum from the minimum DNBR values corresponding to each subset and taking the secondary minimum value as the final minimum DNBR value.

The invention also provides a reactor online protection system, which comprises a processor and a memory storing a computer program, wherein the processor realizes the steps of the reactor online protection method described above when executing the computer program.

The present invention also provides a readable storage medium storing a computer program that, when executed by a processor, realizes the steps of the reactor online protection method described above.

BENEFICIAL EFFECT

In the technical scheme provided by the invention, more on-site detection data are adopted to perform reconstruction calculation on the reactor core power distribution, namely, each group of detection data participates in multiple reconstruction calculations, the reconstruction precision is high, and various different on-site real-time maximum LPD values and minimum DNBR values can be obtained, The accuracy of the maximum LPD value and the minimum DNBR value is greatly improved, the calculation uncertainty is reduced, and more safety margins are obtained.

BRIEF DESCRIPTION OF THE SEVERAL VIEWS OF THE DRAWINGS

In order to more clearly illustrate the embodiments of the present invention, the following will briefly introduce the drawings used in the description of the embodiments. Obviously, the drawings in the following description are only some embodiments of the present invention, and those skilled in the art can also obtain other drawings according to these drawings without creative work. In the drawings:

Fig. 1 is a flow chart of a first embodiment of a reactor online protection method of the present invention;
Fig. 2 is a logic structure diagram of the first embodiment of the reactor online protection system of the present invention.

DETAILED DESCRIPTION OF THE INVENTION

The technical solutions in the embodiments of the present invention will be clearly and completely described below in conjunction with the accompanying drawings in the embodiments of the present invention. Obviously, the described embodiments are only a part of the embodiments, not all of the embodiments. Based on the embodiments of the present invention, all other embodiments obtained by those of ordinary skill in the art without creative work belong to the scope of protection of the present invention.

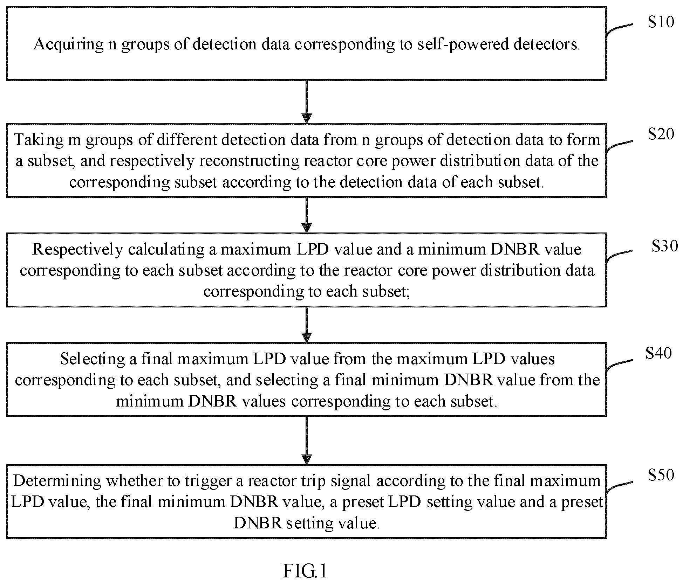

Fig. 1 is a flow chart of a first embodiment of a reactor online protection method according to the present invention. The reactor online protection method of this embodiment is used for LPD and D NBR protection of a reactor, and specifically comprises the following steps:

Step S10.Acquiring n groups of detection data corresponding to self-powered detectors, wherein n ≧ 4;

Step S20.Taking m groups of different detection data from n groups of detection data to form a subset, and respectively reconstructing reactor core power distribution data of the corresponding subset according to the detection data of each subset, wherein m ≧ 3, and m<n;

Step S30.Respectively calculating a maximum LPD value and a minimum DNBR value corresponding to each subset according to the reactor core power distribution data corresponding to each subset;

Step S40.Selecting a final maximum LPD value from the maximum LPD values corresponding to each subset, and selecting a final minimum DNBR value from the minimum DNBR values corresponding to each subset;
Step S50.Determining whether to trigger a reactor trip signal according to the final maximum LPD value, the final minimum DNBR value, a preset LPD setting value and a preset DNBR setting value.

In the embodiment, firstly, n groups of detection data are divided into $C_n^m$ subsets, and core power distribution data are respectively reconstructed based on the detection data of each subset, so as to obtain $C_n^m$ different core power distribution data. Then, according to different reactor core power distribution data, the values of $C_n^m$ different on-site real-time maximum LPD values and minimum DNBR values are calculated, and the final maximum LPD value is determined from the $C_n^m$ maximum LPD values, and the final minimum DNBR value is determined from the $C_n^m$ minimum DNBR values. Finally, determine whether to trigger the reactor trip signal according to the final maximum LPD value and the final minimum DNBR value in combination with a LPD setting value and a DNBR setting value. Therefore, the technical scheme of the embodiment adopts more on-site detection data to perform reconstruction calculation on the reactor core power distribution, namely, each group of detection data participates in multiple times of reconstruction calculation, the reconstruction precision is high, a plurality of different on-site real-time maximum LPD values and minimum DNBR values can be obtained, The calculation uncertainty can be reduced and more safety margin can be obtained.
In one particular embodiment, the reactor cores are, for example, 177 core, 121 core, 157 core, 193 core, 241 core and n = 4, m = 3 and $C_n^m = 4$, i.e., the number of subsets is four. In this embodiment, four groups of self-powered detectors are provided, and after the four groups of detection data of the self-powered detectors are preprocessed respectively, the four groups of detection data are combined according to 3 out of 4 to obtain four regions (subsets) of detection data respectively, and each region includes three groups of detection data. Then, based on the detection data of each region, the core power distribution data are reconstructed respectively, and four different reconstructed whole core power distributions are obtained. Four different values of the maximum LPD and the minimum DNBR are calculated according to different power distributions of the whole core.
Further, in a specific embodiment, the step S40 includes:

selecting the secondary maximum value from the maximum LPD values corresponding to each subset, and taking the secondary maximum value as the final maximum LPD value;
And selecting the secondary minimum value from the DNBR minimum values corresponding to each subset, and taking the secondary minimum value as the final DNBR minimum value.

In this embodiment, considering the safety analysis assumption of single fault, the real-time calculation values of field participation protection takes the secondary maximum value of LPD in 4 regions and the secondary minimum value of DNBR in 4 regions, and the secondary maximum value of LPD in 4 regions/the secondary minimum value of DNBR in 4 regions is taken as the final maximum LPD value/final minimum DNBR value.
Further, in a specific embodiment, the step S50 includes:

Judging whether the final maximum LPD value is greater than a preset LPD setting **value;**
Judging whether the final minimum DNBR value is less than a preset DNBR setting value;
Triggering a reactor trip signal if the final maximum LPD value is greater than the LPD setting value or the final minimum DNBR value is less than the DNBR setting value.

In this embodiment, the secondary maximum value of the LPD in 4 regions /the secondary minimum value of the DNBR in 4 regions is compared with the LPD/DNBR setting value, and if it exceeds or falls below the corresponding setting value, a reactor trip signal is triggered.

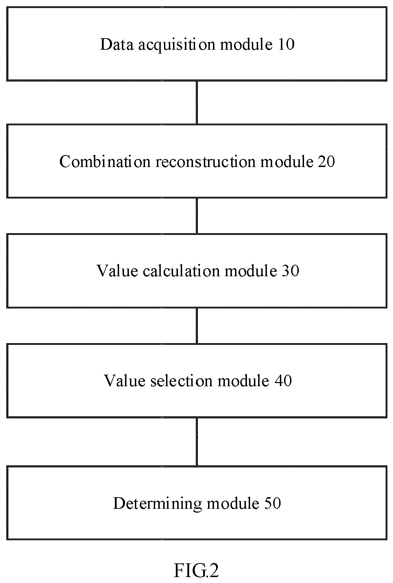

Fig. 2 is a logic structure diagram of a first embodiment of the reactor online protection system according to the present invention. The reactor online protection system of this embodiment comprises a data acquisition module 10, a combination reconstruction module 20, a value calculation module 30, a value selection module 40 and a determining module 50, wherein the data acquisition module 10 is used for acquiring n groups of detection data corresponding to self-powered detectors, wherein n ≧ 4;The combination reconstruction module 20 is used for selecting m groups of different detection data from the n groups of detection data to form a subset, and reconstruct core power distribution data of the corresponding subset according to the detection data of each subset, where m ≧ 3, and m < n; The value calculation module 30 is used for respectively calculating the maximum LPD value and the minimum DNBR value corresponding to each subset according to the core power distribution data corresponding to each subset; The value selection module 40 is used for selecting a final maximum LPD value from the maximum LPD values corresponding to each subset, and selecting a final minimum DNBR value from the minimum DNBR values corresponding to each subset; The determining module 50 is used for determining whether to trigger a reactor trip signal according to the final maximum LPD value, the final minimum DNBR value, and the preset LPD setting value and DNBR setting value. According to the technical scheme of the embodiment, more on-site detection data are adopted to perform reconstruction calculation on the reactor core power distribution, that is, each group of detection data participates in multiple times of reconstruction calculation, the reconstruction precision is high, various different on-site real-time maximum LPD values and minimum DNBR values can be obtained, the value taking precision of the on-site real-time maximum LPD values and minimum DNBR values is greatly improved, The calculation uncertainty can be reduced and more safety margin can be obtained.

In one particular embodiment, n = 4, m = 3, and $C_n^m = 4$ i.e., the number of subsets is four, which is applicable to the 177 core, 121 core, 157 core, 193 core, 241 core and the like.

Further, in a specific embodiment, the value selection module 40 includes a LPD value selection unit and a DNBR value selection unit, wherein the LPD value selection unit is used for selecting a secondary maximum value from the maximum LPD values corresponding to each subset, and taking the secondary maximum value as the final maximum LPD value; And the DNBR value selection unit is used for selecting a secondary minimum value from the DNBR minimum values corresponding to each subset and taking the secondary minimum value as the final DNBR minimum value.

The invention also provides a reactor online protection system, which comprises a processor and a memory, wherein the memory stores a computer program, and the processor realizes the steps of the reactor online protection method when executing the computer program.

The present invention also provides a readable storage medium in which a computer program is stored, and the computer program, when executed by a processor, realizes the steps of the reactor online protection method described above.

The foregoing is merely a preferred embodiment of the present invention and is not intended to limit the present invention, which is susceptible to various modifications and variations as will occur to those skilled in the art.

**Claims**

1. A reactor online protection method, comprising:

   step S10.acquiring n groups of detection data corresponding to self-powered detectors, wherein n ≧ 4;
   step S20.taking m groups of different detection data from n groups of detection data to form a subset, and respectively reconstructing reactor core power distribution data of the corresponding subset according to the detection data of each subset, wherein m ≧ 3, and m<n;
   step S30.respectively calculating a maximum Linear Power Density (LPD) value and a minimum Departure from Nucleate Boiling Ratio (DNBR) value corresponding to each subset according to the reactor core power distribution data corresponding to each subset;
   step S40.selecting a final maximum LPD value from the maximum LPD values corresponding to each subset, and selecting a final minimum DNBR value from the minimum DNBR values corresponding to each subset;
   step S50.determining whether to trigger a reactor trip signal according to the final maximum LPD value, the final minimum DNBR value, a preset LPD setting value and a preset DNBR setting value.

2. The reactor online protection method according to claim 1, wherein n = 4, m = 3, and the number of the subsets is four.

3. The reactor online protection method according to claim 1, wherein in step S40, selecting a final maximum LPD value from the maximum LPD values corresponding to each subset comprises:
   selecting a secondary maximum value from the maximum LPD values corresponding to each subset, and taking the secondary maximum value as the final maximum LPD value.

4. The reactor online protection method according to claim 1, wherein in step S40, selecting a final minimum DNBR value from the minimum DNBR values corresponding to each subset comprises:
   selecting a secondary minimum value from the minimum DNBR values corresponding to each subset, and taking the secondary minimum value as the final minimum DNBR value.

5. The reactor online protection method according to claim 1, wherein the step S50 comprises:

   judging whether the final maximum LPD value is greater than a preset LPD setting value;
   judging whether the final minimum DNBR value is less than a preset DNBR setting value;
   triggering a reactor trip signal if the final maximum LPD value is greater than the LPD setting value or the final minimum DNBR value is less than the DNBR setting value.

6. A reactor online protection system for implementing the reactor online protection method according to claim 1, the system comprising:

a data acquisition module (10) adapted to be used for acquiring n groups of detection data corresponding to self-powered detectors, wherein n $\geqq$ 4;

a combination reconstruction module (20) adapted to be used for selecting m groups of different detection data from the n groups of detection data to form a subset and respectively reconstructing the reactor core power distribution data of the corresponding subset according to the detection data of each subset, wherein m $\geqq$ 3 and m<n;

a value calculation module (30) adapted to be used for respectively calculating a maximum Linear Power Density (LPD) value and a minimum Departure from Nucleate Boiling Ratio (DNBR) value corresponding to each subset according to the reactor core power distribution data corresponding to each subset;

a value selection module (40) adapted to be used for selecting a final maximum LPD value from the maximum LPD values corresponding to each subset, and selecting a final minimum DNBR value from the minimum DNBR values corresponding to each subset;

and a determining module (50) is used for determining whether to trigger a reactor trip signal according to a final maximum LPD value, a final minimum DNBR value, a preset LPD setting value and a preset DNBR setting value.

7. The reactor online protection system of claim 6, wherein n = 4, m = 3, and the number of subsets is four.

8. The reactor online protection system according to claim 6, wherein the value selection module (40) comprises:

a LPD value selection unit is used for selecting a secondary maximum value from the maximum LPD values corresponding to each subset, and use the secondary maximum value as the final maximum LPD value;

and a DNBR value selection unit is used for selecting a secondary minimum value from the minimum DNBR values corresponding to each subset and taking the secondary minimum value as the final minimum DNBR value.

9. The reactor online protection system of claim 6 further comprising a processor and a memory storing a computer program, wherein the processor realizes the steps of the reactor online protection method according to any one of claims 1-5 when executing the computer program.

10. A readable storage medium storing a computer program, wherein the computer program, when executed by a processor, realizes the steps of the method for online protection of a reactor according to any one of claims 1-5.

**Patentansprüche**

1. Online-Schutzverfahren für Reaktor, umfassend:

Schritt S10. Erfassen von n Gruppen von Detektionsdaten, die selbstversorgten Detektoren entsprechen, wobei n $\geqq$ 4;
Schritt S20. Entnehmen von m Gruppen unterschiedlicher Detektionsdaten aus n Gruppen von Detektionsdaten, um eine Teilmenge zu bilden, und jeweiliges Rekonstruieren von Reaktorkern-Leistungsverteilungsdaten der entsprechenden Teilmenge gemäß den Detektionsdaten jeder Teilmenge, wobei m $\geqq$ 3 und m<n;
Schritt S30. jeweiliges Berechnen eines maximalen Wertes für die lineare Leistungsdichte (Linear Power Density, LPD) und eines minimalen Wertes für die Abweichung von dem Kernsiedeverhältnis (Departure from Nucleate Boiling Ratio, DNBR), die jeder Teilmenge entsprechen, gemäß den Reaktorkern-Leistungsverteilungsdaten, die jeder Teilmenge entsprechen;
Schritt S40. Auswählen eines endgültigen maximalen LPD-Werts aus den maximalen LPD-Werten, die jeder Teilmenge entsprechen, und Auswählen eines endgültigen minimalen DNBR-Werts aus den minimalen DNBR-Werten, die jeder Teilmenge entsprechen;
Schritt S50. Bestimmen, ob ein Reaktorauslösesignal in Abhängigkeit von dem endgültigen maximalen LPD-Wert, dem endgültigen minimalen DNBR-Wert, einem voreingestellten LPD-Einstellwert und einem voreingestellten DNBR-Einstellwert ausgelöst werden soll.

2. Online-Schutzverfahren für Reaktor nach Anspruch 1, wobei n = 4, m = 3 und die Anzahl der Teilmengen vier beträgt.

3. Online-Schutzverfahren für Reaktor nach Anspruch 1, wobei in Schritt S40 das Auswählen eines endgültigen maximalen LPD-Werts aus den maximalen LPD-Werten, die jeder Teilmenge entsprechen, Folgendes umfasst:
Auswählen eines sekundären Maximalwerts aus den maximalen LPD-Werten, die jeder Teilmenge entsprechen, und Verwenden des sekundären Maximalwerts als den endgültigen maximalen LPD-Wert.

4. Online-Schutzverfahren für Reaktor nach Anspruch 1, wobei in Schritt S40 das Auswählen eines endgültigen minimalen DNBR-Werts aus den minimalen DNBR-Werten, die jeder Teilmenge entsprechen, Folgendes umfasst:
Auswählen eines sekundären Minimalwerts aus den minimalen DNBR-Werten, die jeder Teilmenge entsprechen, und Verwenden des sekundären Minimalwerts als den endgültigen minimalen DNBR-Wert.

5. Reaktor-Online-Schutzverfahren nach Anspruch 1, wobei der Schritt S50 umfasst:

> Beurteilen, ob der endgültige maximale LPD-Wert größer ist als ein voreingestellter LPD-Einstellungswert;
> Beurteilung, ob der endgültige minimale DNBR-Wert kleiner ist als ein voreingestellter DNBR-Wert;
> Auslösen eines Reaktorauslösesignals, wenn der endgültige maximale LPD-Wert größer ist als der LPD-Einstellwert oder der endgültige minimale DNBR-Wert kleiner ist als der DNBR-Einstellwert.

6. Online-Schutzsystem für Reaktor zum Implementieren des Online-Schutzverfahrens für Reaktor gemäß Anspruch 1, wobei das System Folgendes umfasst:

> ein Datenerfassungsmodul (10), das dazu geeignet ist, n Gruppen von Detektionsdaten zu erfassen, die selbstversorgten Detektoren entsprechen, wobei $n \geqq 4$;
> ein Kombinationsrekonstruktionsmodul (20), das dazu geeignet ist, m Gruppen unterschiedlicher Detektionsdaten aus den n Gruppen von Detektionsdaten auszuwählen, um eine Teilmenge zu bilden, und jeweils die Reaktorkern-Leistungsverteilungsdaten der entsprechenden Teilmenge gemäß den Detektionsdaten jeder Teilmenge zu rekonstruieren, wobei $m \geqq 3$ und m<n;
> ein Wertberechnungsmodul (30), das zum jeweiligen Berechnen eines maximalen Wertes für die lineare Leistungsdichte (LPD) und eines minimalen Wertes für die Abweichung von dem Kernsiedeverhältnis (DNBR) entsprechend jeder Teilmenge gemäß den Leistungsverteilungsdaten des Reaktorkerns entsprechend jeder Teilmenge geeignet ist;
> ein Werteauswahlmodul (40), das zum Auswählen eines endgültigen maximalen LPD-Werts aus den maximalen LPD-Werten, die jeder Teilmenge entsprechen, und zum Auswählen eines endgültigen minimalen DNBR-Werts aus den minimalen DNBR-Werten, die jeder Teilmenge entsprechen, geeignet ist;
> und ein Bestimmungsmodul (50) dazu verwendet wird, zu bestimmen, ob ein Reaktorauslösesignal gemäß einem endgültigen maximalen LPD-Wert, einem endgültigen minimalen DNBR-Wert, einem voreingestellten LPD-Einstellwert und einem voreingestellten DNBR-Einstellwert ausgelöst werden soll.

7. Online-Schutzsystem für Reaktor nach Anspruch 6, wobei n = 4, m = 3 und die Anzahl der Teilmengen vier beträgt.

8. Online-Schutzsystem für Reaktor nach Anspruch 6, wobei das Werteauswahlmodul (40) Folgendes umfasst:
eine LPD-Wert-Auswahleinheit dazu verwendet wird, einen sekundären Maximalwert aus den maximalen LPD-Werten, die jeder Teilmenge entsprechen, auszuwählen und den sekundären Maximalwert als den endgültigen maximalen LPD-Wert zu verwenden; und eine DNBR-Wert-Auswahleinheit dazu verwendet wird, einen sekundären Minimalwert aus den minimalen DNBR-Werten, die jeder Teilmenge entsprechen, auszuwählen und den sekundären Minimalwert als den endgültigen minimalen DNBR-Wert zu verwenden.

9. Online-Schutzsystem für Reaktor nach Anspruch 6, ferner umfassend einen Prozessor und einen Speicher, auf dem ein Computerprogramm gespeichert ist, wobei der Prozessor die Schritte des Online-Schutzverfahrens für Reaktor nach einem der Ansprüche 1 bis 5 durchführt, wenn er das Computerprogramm ausführt.

10. Lesbares Speichermedium, auf dem ein Computerprogramm gespeichert ist, wobei das Computerprogramm, wenn es durch einen Prozessor ausgeführt wird, die Schritte des Verfahrens zum Online-Schutz für Reaktor nach einem der Ansprüche 1-5 durchführt.

**Revendications**

1. Procédé de protection en ligne de réacteur, comprenant :

> étape S10. acquisition de n groupes de données de détection correspondant à des détecteurs auto-alimentés, dans lequel $n \geqq 4$ ;
> étape S20. prise de m groupes de données de détection différentes parmi n groupes de données de détection pour former un sous-ensemble, et reconstruction respective de données de distribution de puissance de cœur de réacteur du sous-ensemble correspondant en fonction des données de détection de chaque sous-ensemble, dans lequel $m \geqq 3$, et m < n ;

étape S30. calcul respectif d'une valeur maximale de densité de puissance linéique (LPD) et d'une valeur minimale de rapport d'écart d'ébullition nucléée (DNBR) correspondant à chaque sous-ensemble en fonction des données de distribution de puissance de cœur de réacteur correspondant à chaque sous-ensemble ;
étape S40. sélection d'une valeur maximale finale de LPD parmi les valeurs maximales de LPD correspondant à chaque sous-ensemble, et sélection d'une valeur minimale finale de DNBR parmi les valeurs minimales de DNBR correspondant à chaque sous-ensemble ;
étape S50. détermination du déclenchement d'un signal d'arrêt de réacteur en fonction de la valeur maximale finale de LPD, de la valeur minimale finale de DNBR, d'une valeur de consigne prédéfinie de LPD et d'une valeur de consigne prédéfinie de DNBR.

2. Procédé de protection en ligne de réacteur selon la revendication 1, dans lequel n = 4, m = 3 et le nombre de sous-ensembles est de quatre.

3. Procédé de protection en ligne de réacteur selon la revendication 1, dans lequel, à l'étape S40, la sélection d'une valeur maximale finale de LPD parmi les valeurs maximales de LPD correspondant à chaque sous-ensemble comprend :
la sélection d'une valeur maximale secondaire parmi les valeurs maximales de LPD correspondant à chaque sous-ensemble, et la prise de la valeur maximale secondaire comme valeur maximale finale de LPD.

4. Procédé de protection en ligne de réacteur selon la revendication 1, dans lequel, à l'étape S40, la sélection d'une valeur minimale finale de DNBR parmi les valeurs minimales de DNBR correspondant à chaque sous-ensemble comprend :
la sélection d'une valeur minimale secondaire parmi les valeurs minimales de DNBR correspondant à chaque sous-ensemble, et la prise de la valeur minimale secondaire comme valeur minimale finale de DNBR.

5. Procédé de protection en ligne de réacteur selon la revendication 1, dans lequel l'étape S50 comprend :

le jugement de savoir si la valeur maximale finale de LPD est supérieure à une valeur de consigne prédéfinie de LPD ;
le jugement de savoir si la valeur minimale finale de DNBR est inférieure à une valeur de consigne prédéfinie de DNBR ;
le déclenchement d'un signal d'arrêt de réacteur si la valeur maximale finale de LPD est supérieure à la valeur de consigne de LPD ou si la valeur minimale finale de DNBR est inférieure à la valeur de consigne de DNBR.

6. Système de protection en ligne de réacteur pour la mise en œuvre du procédé de protection en ligne de réacteur selon la revendication 1, le système comprenant :

un module d'acquisition de données (10) adapté pour être utilisé pour acquérir n groupes de données de détection correspondant à des détecteurs auto-alimentés, dans lequel n ≧ 4 ;
un module de reconstruction de combinaison (20) adapté pour être utilisé pour sélectionner m groupes de données de détection différentes parmi les n groupes de données de détection afin de former un sous-ensemble et reconstruire respectivement les données de distribution de puissance de cœur de réacteur du sous-ensemble correspondant en fonction des données de détection de chaque sous-ensemble, dans lequel m ≧ 3 et m < n ;
un module de calcul de valeur (30) adapté pour être utilisé pour calculer respectivement une valeur maximale de densité de puissance linéique (LPD) et une valeur minimale de rapport d'écart d'ébullition nucléée (DNBR) correspondant à chaque sous-ensemble en fonction des données de distribution de puissance de cœur de réacteur correspondant à chaque sous-ensemble ;
un module de sélection de valeur (40) adapté pour être utilisé pour sélectionner une valeur maximale finale de LPD parmi les valeurs maximales de LPD correspondant à chaque sous-ensemble, et sélectionner une valeur minimale finale de DNBR parmi les valeurs minimales de DNBR correspondant à chaque sous-ensemble ; et un module de détermination (50) est utilisé pour déterminer s'il faut déclencher un signal d'arrêt de réacteur en fonction d'une valeur maximale finale de LPD, d'une valeur minimale finale de DNBR, d'une valeur de consigne prédéfinie de LPD et d'une valeur de consigne prédéfinie de DNBR.

7. Système de protection en ligne de réacteur selon la revendication 6, dans lequel n = 4, m = 3 et le nombre de sous-ensembles est de quatre.

8. Système de protection en ligne de réacteur selon la revendication 6, dans lequel le module de sélection de valeur (40) comprend :

une unité de sélection de valeur de LPD utilisée pour sélectionner une valeur maximale secondaire parmi les valeurs maximales de LPD correspondant à chaque sous-ensemble, et utiliser la valeur maximale secondaire comme valeur maximale finale de LPD ;
une unité de sélection de valeur de DNBR est utilisée pour sélectionner une valeur minimale secondaire parmi les valeurs minimales de DNBR correspondant à chaque sous-ensemble et prendre la valeur minimale secondaire comme valeur minimale finale de DNBR.

9. Système de protection en ligne de réacteur selon la revendication 6 comprenant également un processeur et une mémoire stockant un programme informatique, dans lequel le processeur réalise les étapes du procédé de protection en ligne de réacteur selon l'une quelconque des revendications 1 à 5 lors de l'exécution du programme informatique.

10. Support de stockage lisible stockant un programme informatique, dans lequel le programme informatique, lorsqu'il est exécuté par un processeur, réalise les étapes du procédé de protection en ligne d'un réacteur selon l'une quelconque des revendications 1 à 5.

Acquiring n groups of detection data corresponding to self-powered detectors. — S10

Taking m groups of different detection data from n groups of detection data to form a subset, and respectively reconstructing reactor core power distribution data of the corresponding subset according to the detection data of each subset. — S20

Respectively calculating a maximum LPD value and a minimum DNBR value corresponding to each subset according to the reactor core power distribution data corresponding to each subset; — S30

Selecting a final maximum LPD value from the maximum LPD values corresponding to each subset, and selecting a final minimum DNBR value from the minimum DNBR values corresponding to each subset. — S40

Determining whether to trigger a reactor trip signal according to the final maximum LPD value, the final minimum DNBR value, a preset LPD setting value and a preset DNBR setting value. — S50

FIG.1

FIG.2

**EP 4 481 615 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110322976 B
- CN 113470839 A
- CN 105448361 A
- US 6400786 B1